# EUROPEAN PATENT APPLICATION

(11) **EP 3 147 553 A1**
(43) Date of publication of application: **29.03.2017**
(21) Application number: 14891734.7
(22) Date of filing: 22.10.2014
(51) Int. Cl.: F16M 13/02

(54) **HANDHELD ELECTRONIC DEVICE FIXING APPARATUS CAPABLE OF BEING QUICKLY ASSEMBLED AND DISASSEMBLED AND HAVING DECORATIVE FUNCTION**

(30) Priority: 16.05.2014 CN 201410208326
(71) Applicant: Yu, Changhai, Shenzhen, Guangdong 518119 (CN)
(72) Inventor: Yu, Changhai, Shenzhen, Guangdong 518119 (CN)
(74) Representative: Prüfer & Partner mbB Patentanwälte · Rechtsanwälte
(86) International application number: PCT/CN2014/089171
(87) International publication number: WO 2015/172516

(57) **Abstract**

A handheld electronic device fixing apparatus capable of being quickly assembled and disassembled and having a decorative function; the device comprises a handheld electronic device, a sheet substrate and a sheet decorative connector; the two surfaces of the sheet substrate are respectively a first adhesive surface and a first hook surface; the two surfaces of the sheet decorative connector are respectively a second adhesive surface and a second hook surface; the second hook surface is printed with a color decorative pattern; sheet substrate can be fixedly adhered on any plane; the sheet decorative connector is fixedly adhered on the back surface of the used handheld electronic device, and is fixed to the first hook surface of the sheet substrate via the second hook surface of the sheet decorative connector so as to fix the handheld electronic device on the plane; gently pulling the handheld electronic device enables the second hook surface of the sheet decorative connector to separate from the first hook surface of the sheet substrate so as to disassemble the handheld electronic device. The device can be quickly and conveniently installed on any plane, is stable and reliable, is convenient to disassemble, and has a long service life, a beautiful and fashionable appearance, and a wide application range.

## Description

### FIELD OF THE INVENTION

The present invention relates to a handheld electronic device fixing apparatus , in particular to a handheld electronic device fixing apparatus capable of being quickly disassembled and assembled and having a decorative function.

### BACKGROUND OF THE INVENTION

With the rapid development of electronic and communication technologies, at present, various types of handheld electronic device, such as smartphones, tablet PCs, personal digital assistant machines and navigation devices, have been widely applied in people's life, the application of such kinds of devices is greatly convenient for the communication contact, work, travelling and recreation of people, the living quality of people is improved effectively, and the living way of people is continuously changed. However, the electronic device is small in size and convenient to carry, but such kinds of devices are movable devices and are generally used in the movable state, so that a problem which troubles people for a long term exists, namely how to conveniently and quickly fix the electronic device in vehicles, rooms and offices. Therefore, people developed some devices like supports or suckers to fix the electronic device in the clamping or adsorption manner, but the using effect is not ideal as such kinds of devices are large in size so that the devices need to be fixed, and besides, the devices are poor in appearance and inconvenient to carry and use. Meanwhile, such kinds of devices can only be suitable for certain handheld electronic device, thereby lacking of universality. On the other hand, in order to protect the handheld electronic device, such as mobile phones, people have to assemble shells, protective jackets and the like on the back surface of such kinds of devices, such as the mobile phones, and although they can achieve a certain protective effect, majority of the shells and the protective jackets are made of leather or plastics, so that the size of the handheld electronic device is increased, thereby causing poor hand feeling during use. In addition, the shells of the conventional handheld electronic device are single in colors, thereby lacking decorative effects and aesthetic feeling.

### SUMMARY OF THE INVENTION

Aiming to solve the problems, the present disclosure provides a handheld electronic device fixing apparatus, which can be used in both stationary occasions and movable facilities, can be quickly and conveniently assembled on any planes on which the handheld electronic device is convenient to use, is stable to fix, convenient to disassemble and assemble, long in service life, attractive and fashionable in appearance and wide in applicable range, and has a decorative function.

In order to achieve the purpose, the present disclosure provides a handheld electronic device fixing apparatus, which can be convenient to disassemble and assemble and has a decorative function. The fixing device comprises:
a movable handheld electronic device;
a flexible sheet substrate, wherein one surface of the sheet substrate is a first adhesive surface with a bonding body, and the other surface of the sheet substrate is a first hook surface formed by bulged hook-like fibers;
and a flexible sheet decorative connector, wherein one surface of the sheet decorative connector is a second adhesive surface with a bonding body, and the other surface of the sheet decorative connector is a suede-like second hook surface formed by bulged annular fibers, and the second hook surface is printed with a color decorative pattern;
the sheet substrate can be fixedly adhered on any planes on which the handheld electronic device is convenient to use via the first adhesive surface; the sheet decorative connector is fixedly adhered on the back surface of the used handheld electronic device via the second adhesive surface and is fixedly hooked with the first hook surface of the sheet substrate via the second hook surface thereof, so that the handheld electronic device is fixed to the planes; and the handheld electronic device is lightly pulled, so that the second hook surface of the sheet decorative connector can be separated from the first hook surface of the sheet substrate to be disassembled.

The sheet decorative connector is made from synthetic fiber fabrics, and the sheet substrate is made from the synthetic fiber fabrics or synthetic resin sheets.

The fabrics for making the sheet substrate and the sheet decorative connector are fiber fabrics containing polyamides or polyethylene terephthalate, and synthetic resin sheets for making the sheet substrate are polyamide, polyethylene, polypropylene, polystyrene or polyvinyl chloride sheets.

The first adhesive surface and the second adhesive surface are formed by respectively compounding bonding glue on one surface of the sheet substrate and one surface of the decorative connector.

The first adhesive surface and the second adhesive surface are formed by bonding sheets of which single surfaces or both surfaces are covered with glue; the bonding sheets of which single surfaces are covered with glue are synthetic resin sheets; the bonding sheets of which both surfaces are covered with glue are synthetic fiber fabrics or synthetic resin sheets; surfaces of the bonding sheets of which single surfaces are covered with glue, which are not covered with glue, are in fit to the back surface of the sheet substrate and the back surface of the sheet decorative connector via hot melting under high frequency; and the bonding sheets of which both surfaces are covered with glue are directly adhered on the back surface of the sheet substrate and the back surface of the sheet decorative connector.

The size of the sheet decorative connector corresponds to the peripheral size of the connected handheld electronic device, and the size of the sheet substrate can be the same as or different from that of the sheet decorative connector.

The second hook surface of the sheet decorative connector is printed with the color decorative pattern in the form of transfer printing by thermal dye sublimation or UV embossed ink jet printing, and the first hook surface of the sheet substrate is printed with the color decorative pattern in the form of UV printing.

The thickness of the sheet decorative connector after the transfer printing by thermal dye sublimation or UV embossed inkjet printing is less than that of the sheet decorative connector before printing, so that only part of hook-like fibers are connected with part of annular fibers when the second hook surface of the sheet decorative connector is hooked with the first hook surface of the sheet substrate.

A sunken strip-type edge for preventing peeling is formed near the edge of the second hook surface of the sheet decorative connector.

The handheld electronic device is a mobile communication device, a PC device or a navigation device.

The present disclosure has the contribution that the problems that the fixing device for the conventional handheld electronic device is large in size, inconvenient to assemble and use, lacking of decorative properties and the like are solved effectively. The present disclosure provides a planar fixing device which is easy to combine with the handheld electronic device and a mounting surface, and the fixing device can be used in stationary occasions, such as offices and families, and can also be used in movable facilities, such as vehicles; during use, only the sheet substrate needs to be adhered on the planes in vehicles and rooms, then the handheld electronic device bonded with the sheet decorative connector is pressed on the sheet substrate, and the handheld electronic device can be buckled on the planes, so that the fixing device is quick and convenient to mount and use and stable to fix. The fixing device is the planar fixing device, which almost does not occupy any space, so that the fixing device is convenient to carry and use. During disassembly, the fixing device can be taken down when being lightly pulled, so that the fixing device is quick and convenient to disassemble and assemble, and the device is greatly convenient for users. In addition, the sheet decorative connector is printed with a color pattern, so that the fixing device is full of decorative properties. The fixing device disclosed by the present disclosure is long in service life and attractive and fashionable in appearance, and can be widely suitable for various kinds of handheld electronic devices.

### BRIEF DESCRIPTION OF THE DRAWINGS

Fig. 1 is a schematic diagram of an entire structure of the fixing device according to an embodiment of the present invention;
Fig. 2 is a structural schematic diagram of the sheet substrate of the fixing device according to an embodiment of the present invention; and
Fig. 3 is a structural schematic diagram of the sheet decorative connector of the fixing device according to an embodiment of the present invention.

### DETAILED DESCRIPTION OF THE PREFERRED EMBODIMENTS

The embodiment is the further explanation and demonstration of the fixing device disclosed by the present disclosure, and does not limit the fixing device disclosed by the present disclosure.

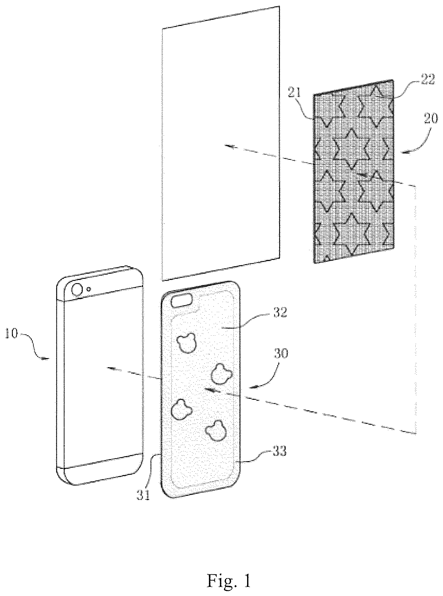

By referring to Fig. 1, the handheld electronic device fixing apparatus capable of being quickly disassembled and assembled and having the decorative function, comprises handheld electronic device 10, a sheet substrate 20 and a sheet decorative connector 30, wherein the handheld electronic device 10 can be a mobile communication device, a PC device or a navigation device, and in the embodiment, the handheld electronic device 10 is a mobile phone. The sheet substrate 20 is used for enabling the plane of the handheld electronic device and the sheet decorative connector 30 to be fixedly connected; the sheet decorative connector 30 is used for enabling the handheld electronic device 10 and the sheet substrate 20 to be fixedly connected; the sheet decorative connector 30 is in detachable connection with the sheet substrate 20; the sheet substrate 20 is fixedly connected with the fixing plane.

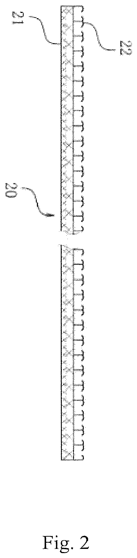

As shown in Fig. 2, the sheet substrate 20 is a flexible sheet body of which the shape and the size can be the same as or different from those of the sheet decorative connector, and the size of the sheet substrate can be larger than or less than that of the sheet decorative connector and can be determined according to actually-used occasions and the type of the connected handheld electronic device. One surface of the sheet substrate 20 is a first adhesive surface 21 with a bonding body, and the first adhesive surface 21 is used for fixedly bonding the sheet substrate 20 to certain planes in rooms or vehicles. The other surface of the sheet substrate is the first hook surface 22 formed by the bulged hook-like fibers, and the hook-like fibers are hook-like bodies formed at the ends of the fibers via a textile technology, so that the hook-like fibers can be hooked with the annular fibers on the sheet decorative connector 30.

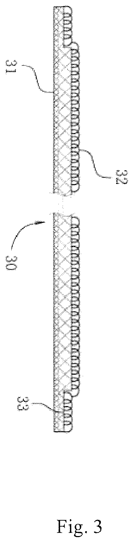

As shown in Fig. 3, the sheet decorative connector 30 is also a flexible sheet body of which the size corresponds to the peripheral size of the handheld electronic device 10, namely the size of the sheet decorative connector can be the same as or slightly greater than that of the back shell of the handheld electronic device 10, so that the margin for the covered edge is reserved. Of course, the size of the sheet decorative connector can also be less than the peripheral size of the handheld electronic device 10. Multiple sheet bodies with small sizes can be made as needed and adhered on different positions on the back surface of the handheld electronic device 10 when the size of the sheet decorative connector is less than the peripheral size of the handheld electronic device 10. One surface of the sheet decorative connector 30 is the second adhesive surface 31 with the bonding body, and the second adhesive surface 31 is used for bonding the sheet decorative connector 30 to the back surface of the handheld electronic device 10. The other surface of the sheet decorative connector 30 is the suede-like second hook surface 32 formed by the bulged annular fibers, and the bulged annular fibers are annular bodies formed via the textile technology to facilitate hooked connection with the hook-like fibers on the sheet substrate 20.

Referring to Fig. 2 and Fig. 3, in the embodiment of the present invention, the sheet substrate 20 and the sheet decorative connector 30 are connecting fixed parts of the handheld electronic device 10 and are required to be high in strength, tenacity and abrasive resistance and long in service life, so that the sheet substrate 20 is made from synthetic fiber fabrics or synthetic resin sheets, and the synthetic fiber fabrics for making the sheet substrate 20 and the sheet decorative connector 30 can be synthetic fiber fabrics containing polyethylene terephthalate and synthetic fiber fabrics containing polyamides. The synthetic resin sheets for making the sheet substrate can be any one of polyamide, polyethylene, polypropylene, polystyrene or polyvinylachloride sheets. Experiments prove that the sheet substrate and the sheet decorative connector made from polyethylene terephthalate or polyamide fiber fabrics have high strength, tenacity and abrasive resistance, meeting requirements for the fixing device disclosed by the embodiment of the invention, so that for the sheet substrate 20 and the sheet decorative connector 30 in the embodiment, the polyethylene terephthalate fiber fabrics are preferably used. The first hook surface 22 of the sheet substrate 20 and the second hook surface 32 of the sheet decorative connector 30 can be formed via a known textile technology, and the bulged hook-like fibers are formed on the first hook surface 22 via the known technology, so that the rough surface is presented on the first hook surface. The suede formed by the bulged annular fibers can be formed on the second hook surface 32 via the known technology, and the hook-like fibers on the first hook surface 22 hook the annular fibers on the second hook surface 32 when the first hook surface 22 is in overlap joint with the second hook surface 32, so that the hook-like fibers are in lap joint with the annular fibers.

In the embodiment of the present invention, as shown in Fig. 2 and Fig. 3, the first adhesive surface 21 and the second adhesive surface 31 can be formed by respectively compounding bonding glue on one surface of the sheet substrate 20 and one surface of the decorative connector 30, and the glue can be covered with the known glue covering technology. In other embodiments of the present invention, the first adhesive surface 21 of the sheet substrate and the second adhesive surface 31 of the sheet decorative connector can be formed by both bonding sheets of which one surface is covered with glue and bonding sheets of which both surfaces are covered with glue. The bonding sheets of which single surfaces are covered with glue are synthetic resin sheets and can be any one of polyamide, polyethylene, polypropylene, polystyrene or polyvinylachloride sheets, and the polythene sheets are preferably used in the embodiment. Surfaces of the bonding sheets of which surfaces are covered with glue, which are not covered with glue, are in fit to the back surface of the sheet substrate 20 and the back surface of the sheet decorative connector 30 via hot melting under high frequency. The bonding sheets of which both surfaces are covered with glue are synthetic fiber fabrics or synthetic resin sheets, and the polyethylene terephthalate synthetic fibers of synthetic fiber fabrics are preferably used in the embodiment. The bonding sheets of which both surfaces are covered with glue are directly adhered on the back surface of the sheet substrate 20 and the back surface of the sheet decorative connector 30.

As shown in Fig.1, the second hook surface 32 of the sheet decorative connector is printed with the color decorative pattern, can be any decorative patterns, and can also be designed by producers or provided by the users. The sheet decorative connector is printed with the color decorative pattern in the form of transfer printing by thermal dye sublimation or UV embossed ink jet printing, in the embodiment, the colored decorative patter is preferably printed in the transfer printing by thermal dye sublimation, and the pattern printed in the form of transfer printing by thermal dye sublimation is distinct and similar with the quality of printing materials. In the printing process, the high-temperature process of transfer printing by thermal dye sublimation can change the soft feeling of the suede of the sheet decorative connector, and fluff on the fabric surface is ironed, causing the thickness of the sheet decorative connector 30 subjected to transfer printing by thermal dye sublimation to be less than thickness before printing, so that only part of annular fibers are connected with the hook-like fibers of the first hook surface 22 of the sheet substrate when the second hook surface 32 of the sheet decorative connector is hooked with the first hook surface 22 of the sheet substrate every time, and the direct effects, namely the hooking force of the sheet decorative connector is gently changed in the process of using the sheet decorative connector for multiple times, the number of use can be improved, the service life can be prolonged, and changes in tensile force in initial and later stages of use are balanced, are achieved. In order to prevent the peeling of the edge of the second hook surface 32 of the sheet decorative connector, a sunken strip-type edge 33 is formed near the edge of the second hook surface 32 in the form of hot pressing or reduction in the thickness of fabrics and the like. In the embodiment of the present invention, in order to enable the first hook surface 22 of the sheet substrate to present decorative properties in the non-connecting state, the first hook surface 22 of the sheet substrate 20 is printed with the color decorative pattern in the form of transfer printing by thermal dye sublimation or UV embossed ink jet printing, so that the colored patterns are presented on the naked surface of the sheet substrate 20, namely the first hook surface 22, after the handheld electronic device 10 is disassembled from the sheet substrate 20, showing aesthetic feeling and decorative properties visually. The naked surface can be used as the carrier of advertising.

According to the using method for the embodiment of the present invention, as shown in Fig.1, the sheet decorative connector 30 is fixedly adhered on the shell on the back surface of the mobile phone via the second adhesive surface 31, so that the second hook surface 32 of the sheet decorative connector is naked, the colored patterns on the second hook surface 32 achieve the decorative effect during daily use, and the second hook surfaces32 also achieves the effect of suede-like hand feeling. The sheet substrate 20 is fixedly adhered on any planes on the front side in rooms or vehicles, on which mobile phones are convenient to use, via the first adhesive surface 21, and preferably, the planes are positions at which the mobile phones are often fixed; the first hook surface 22 is naked after the sheet substrate 20 is fixed. The mobile phones to which the sheet decorative connector 30 is bonded can be directly adhered on the first hook surface 22 of the sheet substrate 20 when the mobile phones need to be fixed, and at this time, the hook-like fibers of the first hook surface 22 are hooked and bonded with the annular fibers of the sheet decorative connector 30, thereby fixing the mobile phones on the to-be-fixed planes. When the mobile phones need to be taken down, only by lightly and outwards pulling the handheld electronic device 10, the second hook surface 32 of the sheet decorative connector can be separated from the first hook surface 22 of the sheet substrate, and the mobile phones are disassembled so that the fixing process and the disassembling process of the mobile phones are convenient and quick through the process. Obviously, other kinds of handheld electronic devices 10, such as handheld PC devices or navigation devices, can be fixed by the fixing device of the embodiment of the present invention.

Although the fixing device disclosed by the present disclosure is disclosed via the embodiments, the protective scope of the fixing device disclosed by the present disclosure is not limited to this, and the deformation, replacement and the like of the members are within the scope of the claims of the present invention under the condition of no deviation from the concept of the present invention.

## Claims

1. A handheld electronic device fixing apparatus capable of being quickly disassembled and assembled and having a decorative function, **characterized by** comprising:
a movable handheld electronic device (10);
a flexible sheet substrate (20), wherein one surface of the sheet substrate is a first adhesive surface (21) with a bonding body, and the other surface of the sheet substrate is a first hook surface (22) formed by bulged hook-like fibers;
and a flexible sheet decorative connector (30), wherein one surface of the sheet decorative connector is a second adhesive surface (31) with a bonding body, and the other surface of the sheet decorative connector is a suede-like second hook surface (32) formed by bulged annular fibers; the surface of the second hook surface is printed with a color decorative pattern; and
the sheet substrate (20) can be fixedly adhered on any planes on which the handheld electronic device is convenient to use via the first adhesive surface (21); the sheet decorative connector (30) is fixedly adhered on the back surface of the used handheld electronic device (10) via the second adhesive surface (31) thereof and is fixedly hooked with the first hook surface (22) of the sheet substrate via the second hook surface thereof (32), so that the handheld electronic device (10) is fixed to the planes; the handheld electronic device (10) is lightly pulled, so that the second hook surface (32) of the sheet decorative connector can be separated from the first hook surface (22) of the sheet substrate to be disassembled.

2. The handheld electronic device fixing apparatus capable of being quickly disassembled and assembled and having the decorative function according to claim 1, **characterized in that** the sheet decorative connector (30) is made from synthetic fiber fabrics; and the sheet substrate (20) is made from the synthetic fiber fabrics or synthetic resin sheets.

3. The handheld electronic device fixing apparatus capable of being quickly disassembled and assembled and having the decorative function according to claim 2, **characterized in that** fabrics for making the sheet substrate (20) and the sheet decorative connector (30) are fiber fabrics containing polyamide or polyethylene terephthalate, and synthetic resin sheets for making the sheet substrate are polyamide, polyethylene, polypropylene, polystyrene or polyvinyl chloride sheets.

4. The handheld electronic device fixing apparatus capable of being quickly disassembled and assembled and having the decorative function according to claim 1, **characterized in that** the first adhesive surface (21) and the second adhesive surface (31) are formed by respectively compounding bonding glue on one surface of the sheet substrate (20) and one surface of the decorative connector (30).

5. The handheld electronic device fixing apparatus capable of being quickly disassembled and assembled and having the decorative function according to claim 1, **characterized in that** the first adhesive surface (21) and the second adhesive surface (31) are formed by bonding sheets of which single surface or both surfaces are covered with glue; the bonding sheets of which single surfaces are covered with glue are synthetic resin sheets; the bonding sheets of which both surfaces are covered with glue are synthetic fiber fabrics or synthetic resin sheets; surfaces of the bonding sheets of which single surfaces are covered with glue, which are not covered with glue, are in fit to the back surface of the sheet substrate (20) and the back surface of the sheet decorative connector (30) via hot melting under high frequency; and the bonding sheets of which both surfaces are covered with glue are directly adhered on the back surface of the sheet substrate (20) and the back surface of the sheet decorative connector (30).

6. The handheld electronic device fixing apparatus capable of being quickly disassembled and assembled and having the decorative function according to claim 5, **characterized in that** the size of the sheet decorative connector (30) corresponds to the peripheral size of the connected handheld electronic device (10), and the size of the sheet substrate (20) can be the same as or different from that of the sheet decorative connector.

7. The handheld electronic device fixing apparatus capable of being quickly disassembled and assembled and having the decorative function according to claim 1, **characterized in that** the second hook surface (32) of the sheet decorative connector (30) is printed with the color decorative pattern in the form of transfer printing by thermal dye sublimation or UV embossed ink jet printing; and the first hook surface (22) of the sheet substrate (20) is printed with the color decorative pattern in the form of UV printing.

8. The handheld electronic device fixing apparatus capable of being quickly disassembled and assembled and having the decorative function according to claim 7, **characterized in that** the thickness of the sheet decorative connector. (30) after the transfer printing by thermal dye sublimation or UV embossed ink jet printing is less than that of the sheet decorative connector (30) before printing, so that only part of hook-like fibers are connected with part of annular fibers when the second hook surface (32) of the sheet decorative connector is hooked with the first hook surface (22) of the sheet substrate.

9. The handheld electronic device fixing apparatus capable of being quickly disassembled and assembled and having the decorative function according to claim 8, **characterized in that** a sunken strip-type edge (33) for preventing peeling is formed near the edge of the second hook surface (32) of the sheet decorative connector.

10. The handheld electronic device fixing apparatus capable of being quickly disassembled and assembled and having the decorative function according to claim 1, **characterized in that** the handheld electronic device (10) is a mobile communication device, a PC device or a navigation device.
